# EUROPEAN PATENT APPLICATION

(11) **EP 4 379 942 A1**
(43) Date of publication of application: **05.06.2024**
(21) Application number: 22849521.4
(22) Date of filing: 27.07.2022
(51) Int. Cl.: H01M 50/463, H01M 4/38, H01M 10/052, H01M 50/414, H01M 50/449, H01M 50/46, H01M 50/486, H01M 50/489

(54) **LITHIUM SECONDARY BATTERY**

(30) Priority: 29.07.2021 JP 2021124726
(71) Applicant: Panasonic Intellectual Property Management Co., Ltd., Kadoma-shi, Osaka 571-0057 (JP)
(72) Inventor: KONDO Shinichiro, Kadoma-shi, Osaka 571-0057 (JP); MIYAMAE Ryohei, Kadoma-shi, Osaka 571-0057 (JP); KANO Akira, Kadoma-shi, Osaka 571-0057 (JP)
(74) Representative: Novagraaf International SA
(86) International application number: PCT/JP2022/028875
(87) International publication number: WO 2023/008460

(57) **Abstract**

A lithium secondary battery includes a positive electrode, a negative electrode facing the positive electrode, a separator disposed between the positive electrode and the negative electrode, a nonaqueous electrolyte having lithium ion conductivity, and a spacer disposed between the negative electrode and the separator. Lithium metal deposits on the negative electrode during charging and the lithium metal dissolves from the negative electrode during discharging. The spacer has a plurality of spot-like projection portions.

## Description

### [Technical Field]

The present disclosure relates to a lithium secondary battery including an electrolyte having lithium ion conductivity.

### [Background Art]

Nonaqueous electrolyte secondary batteries have been used for ICT applications such as personal computers and smartphones, in-vehicle applications, and power storage applications. In such applications, the nonaqueous electrolyte secondary battery is required to have a higher capacity. Lithium ion batteries are known as a high-capacity nonaqueous electrolyte secondary battery. A high capacity lithium ion battery can be achieved by using, for example, graphite and an alloy active material of a silicon compound and the like in combination, as the negative electrode active material. However, the capacity increase of the lithium ion battery is reaching the limit.

Lithium secondary batteries (lithium metal secondary batteries) are promising as a high-capacity nonaqueous electrolyte secondary battery exceeding lithium ion batteries. In the lithium secondary battery, lithium metal deposits on the negative electrode during charging, and the lithium metal dissolves in the nonaqueous electrolyte during discharging.

Patent Literature 1 proposes providing a spacer between the positive electrode and the separator, and providing a space between the positive electrode and the negative electrode for accommodating a lithium metal to suppress decrease in charge and discharge efficiency due to lithium metal deposited in isolation, and to suppress damages on the negative electrode current collector. By providing the spacer between the positive electrode and the separator, a space can be easily kept between the positive electrode and the separator during discharging, and meanwhile, because a space is not easily kept between the negative electrode and the separator, the lithium metal deposits along the negative electrode surface due to the pressure from the separator, suppressing dendritic growth.

### [Citation List]

### [Patent Literature]

[PTL 1]
WO2010 /066254

### [Summary of Invention]

### [Technical Problem]

Cycle characteristics of lithium secondary batteries are improved by controlling deposition form of lithium metal.

### [Solution to Problem]

An aspect of the present disclosure relates to a lithium secondary battery including a positive electrode, a negative electrode facing the positive electrode, a separator disposed between the positive electrode and the negative electrode, a nonaqueous electrolyte having lithium ion conductivity, and a spacer disposed between the negative electrode and the separator, wherein a lithium metal deposits on the negative electrode during charging, and the lithium metal dissolves from the negative electrode during discharging, and the spacer has a plurality of spot-like projection portions.

### [Advantageous Effects of Invention]

With the present disclosure, reduction in cycle characteristics of lithium secondary batteries can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

[FIG. 1] FIG. 1 is a vertical cross sectional view schematically illustrating an example of the lithium secondary battery of an embodiment of the present disclosure.
[FIG. 2] FIG. 2 is a cross sectional view schematically illustrating a configuration of the positive electrode of FIG. 1.
[FIG. 3] FIG. 3 is a cross sectional view schematically illustrating a configuration of the negative electrode unit of FIG. 1.
[FIG. 4] FIG. 4 is a top view schematically illustrating an example of the negative electrode unit included in the lithium secondary battery of FIG. 1.
[FIG. 5] FIG. 5 is an enlarged top view of a part of a negative electrode unit, representing another example of the negative electrode unit.

### [Description of Embodiments]

In the following, examples are illustrated for embodiments of the present disclosure, but the present disclosure is not limited to the examples below. In the following description, specific numerical values and materials may be exemplified, but other numerical values and other materials may be used as long as the effect of the present disclosure is obtained. In this specification, "numeral value A to numeral value B" includes the numeral value A and numeral value B, and can be read as "the numeral value A or more and the numeral value B or less". In the description below, when a lower limit and an upper limit of numeral values relating to specific physical properties and conditions are exemplified, any of the exemplified lower limits and any of the exemplified upper limits can be paired arbitrarily unless the lower limit equals the upper limit or more. When a plurality of materials are given as examples, one type of them can be selected and used singly, or two or more types can be used in combination.

The present disclosure includes a combination of two or more of the items described in claims arbitrarily selected from the plurality of claims in the appended Claims. That is, as long as there is no technical contradiction, two or more items described in claims arbitrarily selected from the plurality of claims in the appended Claims can be combined.

A lithium secondary battery in an embodiment of the present disclosure includes a positive electrode, a negative electrode facing the positive electrode, a separator disposed between the positive electrode and the negative electrode, a nonaqueous electrolyte having lithium ion conductivity, and a spacer disposed between the negative electrode and the separator. The spacer has a plurality of spot-like projection portions. The lithium secondary battery is a type of secondary battery in which lithium metal deposits on the negative electrode during charging, and lithium metal dissolves from the negative electrode during discharging. In the following, the positive electrode and the negative electrode as a whole may be referred to as electrodes.

The spacer ensures a space for lithium metal to deposit on the negative electrode surface, which decreases volume changes of the negative electrode involved with the lithium metal deposition. When the spacer is disposed between the negative electrode and the separator, lithium ions are released smoothly from the positive electrode in initial charging, which is advantageous in terms of improvement in the initial capacity, compared with the case where the spacer is disposed between the positive electrode and the separator.

However, when the spacer is disposed between the negative electrode and the separator, the surface pressure applied to the negative electrode surface tends to vary during charging, which may cause nonuniform lithium metal deposition. As a result, in a region with a small surface pressure, cycle characteristics may decrease due to dendritic lithium metal deposition, which hardly contributes to charge and discharge. Meanwhile, in a region with a large surface pressure, the pressure applied to the electrodes increases locally, which may damage the electrodes.

For example, when a plurality of line-like projection portions (linear projection portions) as a spacer are disposed parallelly to each other in the longitudinal direction of the negative electrode, lithium metal tends to deposit along the longitudinal direction of the negative electrode. As a result, lithium metal deposition may become nonuniform between the longitudinal direction and the width direction of the negative electrode. In addition, when a plurality of line-like projection portions are provided, the area covering the negative electrode with the line-like projection portions tends to become large, which may cause reduction in the capacity or reduction in cycle characteristics.

In contrast, with the lithium secondary battery of the embodiment of the present disclosure, with the spacer disposed in a spotted manner, the generation of a region with a locally small surface pressure is suppressed, and reduction in cycle characteristics is suppressed. Also, the region in the negative electrode covered with the spacer can be minimized, and the capacity and cycle characteristics can be kept high.

Furthermore, the spot-like projection portions do not hinder the flowability of the liquid electrolyte compared with the line-like projection portions, and therefore cycle characteristics can be kept high. In particular, with a lithium secondary battery in which lithium metal deposits on the negative electrode, it is important that a sufficient liquid electrolyte is supplied near the negative electrode surface. The spot-like projection portions provided between the negative electrode and the separator secure the space for the lithium metal to deposit, and also work to secure the space for the liquid electrolyte to circulate on the negative electrode surface. In this regard, the spot-like projection portions provided between the negative electrode and the separator are effective compared with those provided between the positive electrode and the separator.

The spacers may be provided on the negative electrode surface, or on the separator surface facing the negative electrode. In the following, the negative electrode with spacers provided on the surface thereof may also be referred to as a negative electrode unit. A separator with spacers provided on the surface thereof may also be referred to as a composite separator.

The spacer may include a plurality of projected portion groups in which a plurality of spot-like projection portions are disposed at an equal interval in the short direction of a strip negative electrode. These projected portion groups may be arranged at an equal interval in the longitudinal direction of the negative electrode. In this case, the spot-like projection portions may be disposed so that their positions in the short direction are offset between the projected portion groups that are next to each other in the longitudinal direction. The spot-like projection portions being disposed so that their positions are offset in the short direction means, when comparing the positions in the short direction of the plurality of spot-like projection portions belonging to one projected portion group with that of the spot-like projection portions belonging to the other projected portion group, each of the position of the spot-like projection portions belonging to one projected portion group is distant by a predetermined distance from the position of the corresponding spot-like projection portions belonging to the other projected portion group. When evaluating the distance between the spot-like projection portions, the position of the spot-like projection portions means a center position of a spot of the spot-like projection portion. The center position means a position of the center of gravity calculated based on the contour shape of the spot.

Surroundings of the spot-like projection portion tend to have lithium metal deposition, where the pressure (stress) to the electrodes tends to concentrate during charging. Thus, when the projected portion group is present, the stress concentration portions surrounding the spot-like projection portions are connected with each other in the short direction, which may cause a fracture of the electrodes (or current collectors). To avoid the fracture of electrodes (current collectors), the spot-like projection portions can be disposed to widen the distance therebetween so that the stress concentration portions do not connect with each other, but it may become difficult to ensure spaces for the lithium metal to deposit, and may adversely reduce cycle characteristics.

However, by disposing the spot-like projection portions so that their positions in the short direction are offset between the projected portion groups that are next to each other in the longitudinal direction, while keeping the density of the spot-like projection portions per the negative electrode area to a certain density or more, and ensuring the space for the lithium metal to deposit, the distance between the spot-like projection portions in the short direction can be made longer. As a result, while suppressing the reduction in cycle characteristics, connection of the stress concentration portions in the short direction is suppressed, and the electrode fracture is suppressed.

The spot-like projection portions are offset, between the projected portion groups next to each other, preferably by half the arrangement interval of the spot-like projection portions in the projected portion groups. In this case, the reduction in cycle characteristics and the electrode fracture both can be suppressed at a high level.

In view of securing a least minimum space between the negative electrode and the separator, the height of the spacer (that is, a height of the spot-like projection portion) may be, depending on the battery size, 0.02 mm or more and 0.09 mm or less, or 0.015 mm or more and 0.1 mm or less. The spacer height h is the average height of the spot-like projection portions, and can be determined by selecting random 10 spot-like projection portions, and averaging the measured maximum height values at the position farthest from the negative electrode current collector.

The contour shape of the spot-like projection portion seen from the normal direction of the negative electrode surface may be a circle, a polygon, but it is not limited thereto particularly. The contour shape has an area of, for example, 0.5 mm² or more and 20 mm² or less. The contour shape has an external diameter of, for example, 0.5 mm or more and 10 mm or less. The contour shape has an internal diameter of, for example 0.5 mm or more and 8.8 mm or less. The area of the contour shape means a projected area when a spot-like projection portion is projected onto the negative electrode surface. The external diameter of the contour shape means a diameter of a circumscribed circle of the contour shape. The internal diameter of the contour shape means a diameter of an inscribed circle of the contour shape.

In view of improvement in the flowability of the nonaqueous electrolyte on the negative electrode surface, some of the spot-like projection portions may have a different height from the remaining spot-like projection portions. For example, the spot-like projection portions next to each other may have different heights. The plurality of spot-like projection portions may include a spot-like projection portion with a height of h1, and a spot-like projection portion with a height of h2 smaller than the height h1. In this case, the ratio h2/h1 of the height h2 relative to the height h1 may be, for example, 0.8 or more and less than 1.0, or 0.8 or more and 0.95 or less.

In view of suppressing lithium metal deposition on the spot-like projection portion surface, the plurality of line-like projection portions may be made of a material with a lower electrical conductivity than that of the negative electrode, or may be made of a resin material.

When straight lines are drawn on the plurality of spot-like projection portions, the straight lines passing one of the spot-like projection portions and being parallel to the short direction of the negative electrode, preferably, the distance between the straight lines next to each other may be 1.5 mm or more and 4.0 mm or less. This means that when the spot-like projection portions form projected portion groups disposed at an equal interval in the short direction of the negative electrode, the distance between the straight lines parallel to the short direction connecting the plurality of spot-like projection portions of the projected portion group is 1.5 mm or more and 4.0 mm or less. In this case, reduction in cycle characteristics can be significantly suppressed.

The ratio of the area of the negative electrode covered with the spacer relative to the negative electrode surface area (hereinafter, also referred to as coverage of the negative electrode surface with the spacer.) may be 5% or more and 20% or less, or 5% or more and 15% or less. When the coverage of the negative electrode surface with the spacer is 20% or less, adverse effects on battery performance by the spacer covering the negative electrode surface can be kept to minimum. When the coverage of the negative electrode surface with the spacer is 5% or more, the space for lithium metal to deposit can be sufficiently provided by the spacer, and the effects of suppressing reduction in cycle characteristics can be achieved sufficiently.

The spacer may be disposed on both sides of the negative electrode. That is, the negative electrode has a first surface and a second surface opposite to the first surface, and the spacer having spot-like projection portions may be disposed between the first surface of the negative electrode and the separator disposed at the first surface side, and between the second surface of the negative electrode and the separator disposed at the second surface side. In the following, the spacer (spot-like projection portion) disposed at the first surface side of the negative electrode is called a first spacer (first spot-like projection portion), and the spacer (spot-like projection portion) disposed at the second surface side of the negative electrode is called a second spacer (second spot-like projection portion).

The second spot-like projection portions may be disposed at positions of the second surface opposite to the first spot-like projection portion, or disposed at positions of the second surface opposite to the region of the first surface where the first spot-like projection portions are not disposed. In other words, when seen from the normal direction of the first surface or the second surface of the negative electrode, the second spot-like projection portions may be disposed at positions overlapping the first spot-like projection portions, or may be disposed at positions not overlapping the first spot-like projection portions.

When a wound type electrode group is formed, the first spot-like projection portions (or second spot-like projection portions) press, through the separator and the positive electrode, the second surface (or the first surface) of the negative electrode positioned at the inner or outer periphery, working to increase the surface pressure during charging. In this manner, deposition of lithium metal dendrites and the like are suppressed, and reduction in cycle characteristics is suppressed.

Also, when the second spot-like projection portions are disposed at positions not overlapping the first spot-like projection portions, the second spot-like projection portions press, through the separator and the positive electrode, the negative electrode positioned at the inner or outer periphery, and press the space formed between the first spot-like projection portions from the second surface side toward the first surface side. As a result, the surface pressure during charging is increased even more, and the effects of suppressing reduction in cycle characteristics can be increased even more.

Also, by disposing the first spot-like projection portions and the second spot-like projection portions so as not to overlap with each other, increase in the thickness of the negative electrode locally near the projection portions by lithium metal deposition is suppressed, which improves cycle characteristics.

Thus, in terms of suppressing reduction in cycle characteristics, preferably, the second spot-like projection portions are disposed at positions of the second surface positioned opposite to the region of the first surface where the first spot-like projection portions are not disposed (that is, the second spot-like projection portions are disposed at positions not overlapping the first spot-like projection portions). However, the second spot-like projection portions may be disposed at positions overlapping the first spot-like projection portions. In this case, because the second spot-like projection portions are disposed at positions overlapping the first spot-like projection portions, the second spot-like projection portions do not press the space formed between the first spot-like projection portions. Therefore, a protruding deformation of the negative electrode current collector toward the first surface side is not likely to occur at the positions of the second spot-like projection portions, and the negative electrode current collector fractures are easily suppressed.

In the present disclosure, when the electrode group is a wound type, "seeing from the normal direction of the surface" means seeing from the normal direction with the surface extended to be flat. Thus, "projection portions overlapping projection portions " does not include a case where the projection portions overlap the projection portions by winding.

The lithium secondary battery may include a laminate type electrode group formed by laminating a positive electrode and a negative electrode with a separator interposed therebetween, or include a wound type electrode group formed by winding the positive electrode and the negative electrode into a spiral shape with a separator interposed therebetween.

In the following, each of the elements of the lithium secondary battery is described further in detail.

### [Negative electrode]

The negative electrode includes a negative electrode current collector. In lithium secondary batteries, lithium metal deposits on a surface of the negative electrode current collector by charging. More specifically, lithium ions included in the nonaqueous electrolyte receive electrons on the negative electrode current collector by charging to be a lithium metal, and deposit on the negative electrode current collector surface. The lithium metal deposited on the negative electrode current collector surface dissolves in the nonaqueous electrolyte by discharging as lithium ions. The lithium ions included in the nonaqueous electrolyte may be derived from a lithium salt added to the nonaqueous electrolyte, or may be supplied from the positive electrode active material by charging, or may be both.

The negative electrode current collector may be a strip conductive sheet. For the conductive sheet, a foil, a film, and the like are used.

The surface of the conductive sheet may be smooth. This allows the lithium metal derived from the positive electrode to easily deposit on the conductive sheet uniformly during charging. Smooth means that the conductive sheet has a maximum height roughness Rz of 20 µm or less. The conductive sheet may have a maximum height roughness Rz of 10 µm or less. The maximum height roughness Rz is measured in accordance with JIS B 0601: 2013.

The material of the negative electrode current collector (conductive sheet) may be a conductive material other than lithium metal and a lithium alloy. The conductive material may be metal, a metal material such as an alloy, and the like. Preferably, the conductive material is a material that does not react with lithium. More specifically, a material that does not form an alloy or an intermetallic compound with lithium is preferable. Such a conductive material may be, for example, copper (Cu), nickel (Ni), iron (Fe), and an alloy including these metal elements, or graphite with its basal plane exposed with priority. For the alloy, a Cu alloy, stainless steel (SUS), and the like are cited. Among them, highly conductive copper and/or a copper alloy is preferred.

The thickness of the negative electrode current collector may be, without particular limitation, for example, 5 µm or more and 300 µm or less.

A negative electrode mixture layer (not shown) may be formed on the negative electrode current collector surface. The negative electrode mixture layer is formed, for example, by applying a paste including a negative electrode active material such as graphite onto at least a portion of the negative electrode current collector surface. However, in view of achieving a high capacity lithium secondary battery more than lithium ion batteries, the thickness of the negative electrode mixture layer is set to be sufficiently thin so that lithium metal can deposit on the negative electrode.

### [Spacer]

The material forming the spacer is not particularly limited. The spacer may be formed of a conductive material and/or an insulating material. The spacer may be provided on the negative electrode surface, or may be provided on the separator surface (surface facing the negative electrode).

The conductive material may be suitably selected from those exemplified for the negative electrode current collector material. Such spacers can be provided by pressing the negative electrode current collector to form projection portions. Also, a conductive coating material may be applied on the negative electrode surface, or a conductive tape may be attached onto the negative electrode surface.

Examples of the insulating material include a resin material. Examples of the resin material include a polyolefin resin, an acrylic resin, a polyamide resin, a polyimide resin, a silicone resin, and a fluorine resin. A cured product of a curable resin such as an epoxy resin may be used. An inorganic filler and the like may be mixed into these resin materials. The spacer may be formed by attaching, for example, a resin-made adhesive tape onto the negative electrode surface. The spacer may also be formed by applying and drying a solution or a dispersion liquid including a resin material onto the negative electrode surface or a surface of the separator facing the negative electrode. The spacer may be formed on the negative electrode surface or a surface of the separator facing the negative electrode by applying a curable resin in a desired shape, and then drying.

### [Positive electrode]

The positive electrode includes, for example, a positive electrode current collector, and a positive electrode mixture layer supported on the positive electrode current collector. The positive electrode mixture layer includes, for example, a positive electrode active material, a conductive material, and a binder. The positive electrode mixture layer may be formed on only one surface of the positive electrode current collector, or on both surfaces thereof. The positive electrode is produced by, for example, applying a positive electrode mixture slurry containing a positive electrode active material, a conductive material, and a binder onto both surfaces of the positive electrode current collector, drying the applied coating, and then rolling.

The positive electrode active material is a material that stores and releases lithium ions. Examples of the positive electrode active material include lithium-containing transition metal oxide, transition metal fluoride, polyanion, fluorinated polyanion, and transition metal sulfide. In particular, the lithium-containing transition metal oxide is preferable in view of low production costs and high average discharge voltage.

Examples of the transition metal element included in the lithium-containing transition metal oxide include Sc, Ti, V, Cr, Mn, Fe, Co, Ni, Cu, Y, Zr, and W. The lithium-containing transition metal oxide may include a kind of the transition metal element, or two or more kinds thereof. The transition metal element may be Co, Ni and/or Mn. The lithium-containing transition metal oxide may include, as necessary, one or more typical elements. For the typical elements, Mg, Al, Ca, Zn, Ga, Ge, Sn, Sb, Pb, and Bi may be used. The typical element may be Al and the like.

Preferably, of the lithium-containing transition metal oxides, in particular, a composite oxide including Co, Ni and/or Mn as a transition metal element, Al as an optional component, and having a rock salt type crystal structure with a layered structure is used in terms of achieving a high capacity. In this case, in the lithium secondary battery, a molar ratio mLi /mM of a total amount of lithium mLi included in the positive electrode and the negative electrode and an amount of a metal other than lithium M included in the positive electrode mM is, for example, set to 1.1 or less.

The conductive material is, for example, a carbon material. For the carbon material, carbon black, acetylene black, Ketjen Black, carbon nanotube, graphite, and the like may be used.

Examples of the binder include a fluorocarbon resin, polyacrylonitrile, a polyimide resin, an acrylic resin, a polyolefin resin, and a rubber polymer. For the fluorocarbon resin, polytetrafluoroethylene, polyvinylidene fluoride, and the like are used.

The positive electrode current collector may be a conductive sheet. For the conductive sheet, a foil, a film, and the like are used. A carbon material may be applied to the positive electrode current collector surface.

Examples of the material of the positive electrode current collector (conductive sheet) include, for example, a metal material including Al, Ti, or Fe. The metal material may be Al, an Al alloy, Ti, a Ti alloy, a Fe alloy, and the like. The Fe alloy may be stainless steel (SUS).

The thickness of the positive electrode current collector may be, without particular limitation, for example, 5 µm or more and 300 µm or less.

### [Separator]

For the separator, a porous sheet having ion permeability and insulating properties is used. Examples of the porous sheet include a microporous thin film, woven fabric, and nonwoven fabric. The separator material is not particularly limited, and may be a polymer material. For the polymer material, an olefin resin, a polyamide resin, cellulose, and the like are used. For the olefin resin, polyethylene, polypropylene, and a copolymer of ethylene and propylene are used. The separator may include, as necessary, an additive. For the additive, an inorganic filler and the like are used.

### [Nonaqueous electrolyte]

A nonaqueous electrolyte with lithium ion conductivity includes, for example, a nonaqueous solvent, and lithium ions and anions dissolved in the nonaqueous solvent. The nonaqueous electrolyte may be a liquid or a gel.

The liquid nonaqueous electrolyte is prepared by dissolving a lithium salt in a nonaqueous solvent. By dissolving the lithium salt in the nonaqueous solvent, lithium ions and anions are generated.

The gel nonaqueous electrolyte includes a lithium salt and a matrix polymer, or includes a lithium salt, a nonaqueous solvent, and a matrix polymer. As the matrix polymer, for example, a polymer material which absorbs the nonaqueous solvent and forms gel is used. Examples of the polymer material include fluorocarbon resin, acrylic resin, and polyether resin.

As the lithium salt or the anion, a known material used in a nonaqueous electrolyte of lithium secondary batteries can be used. Specifically, BF₄⁻, ClO₄⁻, PF₆⁻, CF₃SO₃⁻, CF₃CO₂⁻, anions of imides, and anions of oxalate complexes are used. For the anions of imides, N(SO₂CF₃)₂⁻, N(CₘF₂ₘ₊₁SO₂)ₓ(CₙF₂ₙ₊₁SO₂)_{y}⁻ (m and n are each independently an integer of 0 or 1 or more, x and y are each independently 0, 1, or 2, and x+ y = 2 is satisfied. The anions of oxalate complexes may contain boron and/or phosphorus. Examples of the oxalate complex anions include bis oxalateborate anion, BF₂(C₂O₄)⁻, PF₄(C₂O₄)⁻, and PF₂(C₂O₄)₂⁻. The nonaqueous electrolyte may contain one kind of these anions, and may contain two or more kinds thereof.

Preferably, in view of suppressing dendritic lithium metal deposition, the nonaqueous electrolyte includes at least oxalate complex anions. Interaction between the oxalate complex anion and lithium allows the lithium metal to deposit as fine particles homogeneously. Therefore, local deposition of lithium metal can be easily suppressed. The oxalate complex anion and other anions may be combined. Other anions may be anions of PF₆⁻ and/or imides.

Examples of the nonaqueous solvent include esters, ethers, nitriles, amides, or halogen substitutes thereof. The nonaqueous electrolyte may contain one kind of these nonaqueous solvents, and may contain two or more kinds thereof. Examples of the halogen substitutes include fluoride and the like.

Examples of the esters include carbonates and carboxylates. For the cyclic carbonates, ethylene carbonate, propylene carbonate, fluoroethylene carbonate (FEC), and the like may be used. Examples of the chain carbonates include dimethyl carbonate (DMC), ethyl methyl carbonate (EMC), and diethyl carbonate. Examples of the cyclic carboxylates include γ-butyrolactone and γ-valerolactone. Examples of the chain carboxylates include ethyl acetate, methyl propionate, and methyl fluoropropionate.

Examples of the ethers includes cyclic ethers and chain ethers. Examples of the cyclic ethers include 1,3-dioxolane, 4-methyl-1,3-dioxolane, tetrahydrofuran, and 2-methyltetrahydrofuran. Examples of chain ethers include 1,2-dimethoxyethane, diethyl ether, ethyl vinyl ether, methyl phenyl ether, benzyl ethyl ether, diphenyl ether, dibenzyl ether, 1,2-diethoxyethane, diethylene glycol dimethyl ether, and the like.

The concentration of the lithium salt in the nonaqueous electrolyte is, for example, 0.5 mol/L or more and 3.5 mol/L or less. The concentration of anions in the nonaqueous electrolyte may be 0.5 mol/L or more and 3.5 mol/L or less. The concentration of the oxalate complex anion in the nonaqueous electrolyte may be 0.05 mol/L or more and 1 mol/L or less.

The nonaqueous electrolyte may contain additives. The additives may be those forming a coating on the negative electrode. By forming a coating derived from the additive on the negative electrode, generation of dendrites can be easily suppressed. Examples of such additives include vinylene carbonate, FEC, and vinyl ethyl carbonate (VEC).

In the following, a configuration of the lithium secondary battery of the present disclosure is described with reference to figures, with a cylindrical battery including a wound type electrode group as an example. Note here that the present disclosure is not limited to the following configurations.

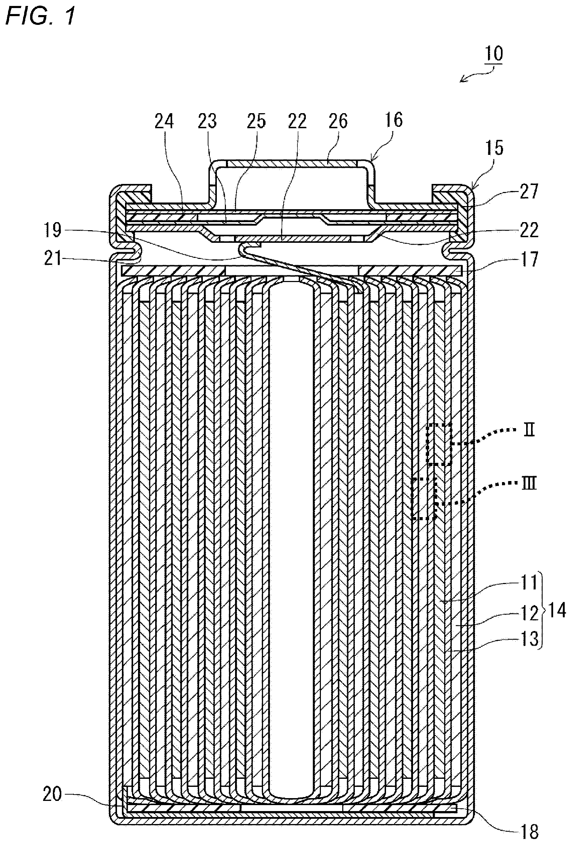

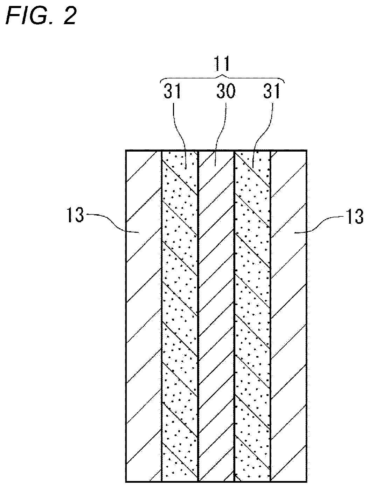

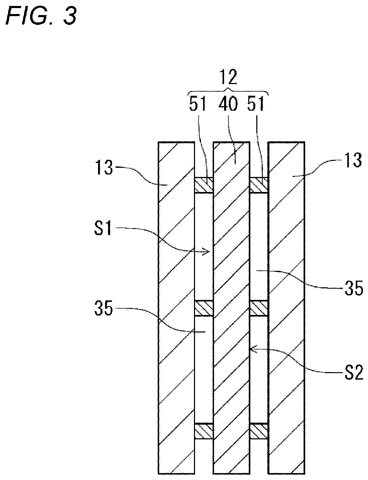

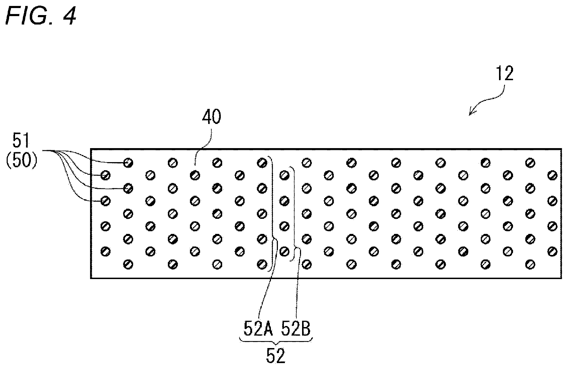

FIG. 1 is a vertical cross sectional view schematically illustrating an example of the lithium secondary battery of the embodiment of the present disclosure. FIG. 2 is a cross sectional view schematically illustrating a configuration of the positive electrode of FIG. 1, with an enlargement of the portion encircled as the region II in FIG. 1. FIG. 3 is a cross sectional view schematically illustrating a configuration of the negative electrode unit of FIG. 1, with an enlargement of a portion encircled as the region III of FIG. 1. FIG. 4 is a top view schematically illustrating an example of the negative electrode unit included in the lithium secondary battery of FIG. 1

A lithium secondary battery 10 is a cylindrical battery including a cylindrical battery case, a wound type electrode group 14 accommodated in the battery case, and a nonaqueous electrolyte, which is not shown. The battery case is formed with a case main body 15 of a bottomed cylindrical metal-made vessel, and a sealing body 16 that seals an opening of the case main body 15. A gasket 27 is disposed between the case main body 15 and the sealing body 16, and in this manner, sealing properties of the battery case are ensured. In the case main body 15, at both end portions in the winding axis direction of the electrode group 14, insulating plates 17 and 18 are disposed, respectively.

The case main body 15 has, for example, a step portion 21 formed by pressing the side wall of the case main body 15 partially from outside. The step portion 21 may be formed into a ring at the side wall of the case main body 15 along the circumferential direction of the case main body 15. In this case, the sealing body 16 is supported at the face of the opening side of the step portion 21.

The sealing body 16 includes a filter 22, a lower valve 23, an insulating member 24, an upper valve 25, and a cap 26. At the sealing body 16, these members are laminated in this order. The sealing body 16 is attached to the opening of the case main body 15 so that the cap 26 is positioned outside of the case main body 15 and the filter 22 is positioned inside of the case main body 15. Each of the above-described members forming the sealing body 16 are, for example, a disk shape or a ring shape. The lower valve 23 and the upper valve 25 are connected to each other at their center portions, and the insulating member 24 is interposed between their peripheral portions. The filter 22 and the lower valve 23 are connected to each other at their central portions. The upper valve 25 and the cap 26 are connected to each other at their central portions. That is, the members excluding the insulating member 24 are electrically connected to each other.

A ventilation hole, which is not shown, is formed at the lower valve 23. Thus, when the internal pressure of the battery case increases due to abnormal heat generation and the like, the upper valve 25 bulges to the cap 26 side to be apart from the lower valve 23. In this manner, the electrical connection between the lower valve 23 and the upper valve 25 is shut down. Furthermore, when the internal pressure increases, the upper valve 25 fractures and gas is released from an aperture, which is not shown, formed in the cap 26.

The electrode group 14 has a positive electrode 11, a negative electrode unit 12, and a separator 13. The positive electrode 11, the negative electrode unit 12, and the separator 13 are all strips. The positive electrode 11 and the negative electrode unit 12 are wound into a spiral shape with the separator 13 interposed therebetween so that the width direction of the strip positive electrode 11 and negative electrode unit 12 are parallel to the winding axis. At a cross section of the electrode group 14 perpendicular to the winding axis, the positive electrode 11 and the negative electrode unit 12 are laminated alternately in the radial direction of the electrode group 14 with the separator 13 interposed therebetween. That is, the longitudinal direction of the electrodes is the winding direction, and the width direction of the electrodes is the axis direction.

The positive electrode 11 is electrically connected to the cap 26 also serving as a positive electrode terminal through a positive electrode lead 19. An end portion of the positive electrode lead 19 is connected, for example, near a center in the longitudinal direction of the positive electrode 11. The positive electrode lead 19 extended from the positive electrode 11 extends to the filter 22 through a through hole, which is not shown, formed on the insulating plate 17. The other end of the positive electrode lead 19 is welded to a surface of the filter 22 of the electrode group 14 side.

The positive electrode 11 includes a positive electrode current collector 30 and a positive electrode mixture layer 31 (ref: FIG. 2), and is electrically connected to a cap 26 working as a positive electrode terminal through a positive electrode lead 19. An end of the positive electrode lead 19 is connected, for example, near a center in the longitudinal direction of the positive electrode 11. The positive electrode lead 19 extended from the positive electrode 11 extends to the filter 22 through a through hole, which is not shown, formed on the insulating plate 17. The other end of the positive electrode lead 19 is welded to a surface of the filter 22 of the electrode group 14 side.

As shown in FIG. 3 and FIG. 4, the negative electrode unit 12 includes a strip negative electrode 40, and the negative electrode 40 has a first surface S1 and a second surface S2 at an opposite side of the first surface S1. The negative electrode 40 includes at least a strip negative electrode current collector, and may include the strip negative electrode current collector and a negative electrode mixture layer formed on both sides of the negative electrode current collector. The negative electrode current collector of the negative electrode 40 is electrically connected to the case main body 15 working as a negative electrode terminal through a negative electrode lead 20. An end of the negative electrode lead 20 is connected to, for example, an end portion in the longitudinal direction of the negative electrode current collector of the negative electrode 40, and the other end is welded to the inner bottom portion of the case main body 15.

As shown in FIG. 3 and FIG. 4, the negative electrode unit 12 includes a spacer 50 provided on the first surface S1 and on the second surface S2 of the negative electrode 40. As shown in FIG. 4, the spacer 50 has a plurality of spot-like projection portions 51 disposed in a scattered manner on the surface of the negative electrode 40. The presence of the plurality of spot-like projection portions 51 allows a space 35 to be formed between the first surface S1 and the separator 13, and between the second surface S2 and the separator 13.

In the lithium secondary battery 10, lithium metal deposits in the space 35 on the negative electrode 40 by charging, and the deposited lithium metal dissolves into the nonaqueous electrolyte by discharging. The lithium metal deposited on the negative electrode surface is accommodated in the space 35, which decreases volume changes of the negative electrode along with lithium metal deposition, and improves cycle characteristics.

As shown in FIG. 4, the spacer 50 includes a plurality of projected portion groups 52 (52A, 52B), in which a plurality of spot-like projection portions 51 are disposed at an equal interval in the short direction (width direction of the strip) of the negative electrode 40. The plurality of projected portion groups 52 are disposed at an equal interval in the longitudinal direction of the negative electrode 40. Of the plurality of projected portion groups 52, between the projected portion groups 52A and 52B that are next to each other in the longitudinal direction, the positions of the spot-like projection portions 51 in the projected portion group are offset in the short direction, and are disposed in a staggered manner. The positional offset in the short direction of the spot-like projection portions 51 between the projected portion groups 52A and 52B next to each other is about the half of the spaced-apart distance in the short direction of the spot-like projection portions 51.

In examples of FIG. 3 and FIG 4, when seen from the normal direction of the first surface S1, the spot-like projection portions 51 provided on the second surface S2 of the negative electrode 40 are disposed at positions overlapping the spot-like projection portions 51 provided on the first surface S1 of the negative electrode 40. However, the spot-like projection portions 51 provided on both sides of the negative electrode may be at the same positions at both a front surface and a back surface of the negative electrode, or may be at different positions, when seen from the normal direction of one surface.

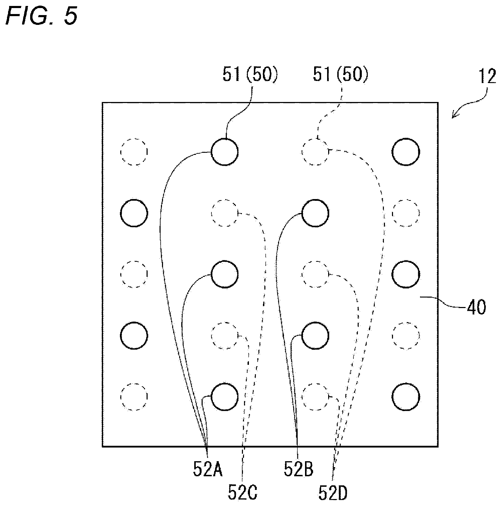

FIG. 5 is an enlarged view of a portion of the negative electrode unit, illustrating another example of the negative electrode unit. In FIG. 5, in addition to the spacers provided on the front surface (first surface) of the negative electrode, the positions of the spacers provided on the back surface (second surface) of the negative electrode are shown with dotted lines. In the example of FIG 5, when seen from the normal direction of the first surface S1, the spot-like projection portions 51 provided on the second surface S2 of the negative electrode 40 (spot-like projection portions 51 shown with the broken line in FIG. 5) are disposed at positions not overlapping the spot-like projection portions 51 provided on the first surface S1 of the negative electrode 40 (spot-like projection portions 51 shown with the solid line in FIG. 5). The spacer 50 provided on the second surface S2 includes, similarly to the spacer 50 provided on the first surface S1, a plurality of projected portion groups 52 (52C, 52D), in which a plurality of spot-like projection portions 51 are disposed at an equal interval in the short direction (width direction of the strip) of the negative electrode 40. The projected portion group 52C provided on the second surface corresponds to the projected portion group 52A provided on the first surface, and the projected portion group 52D provided on the second surface corresponds to the projected portion group 52B provided on the first surface.

When seen from the normal direction of the first surface S1, in the projected portion groups 52A and 52C, the positions of the spot-like projection portions 51 in the longitudinal direction are the same, but the positions in the short direction in the projected portion group are offset. Similarly, when seen from the normal direction of the first surface S1, in the projected portion groups 52B and 52D, the positions in the longitudinal direction of the spot-like projection portions 51 are the same, but the positions in the short direction in the projected portion group are offset.

The positional offset in the short direction of the spot-like projection portions 51 in the projected portion groups 52A and 52C is about the half of the spaced-apart distance in the short direction of the spot-like projection portions 51. Similarly, the positional offset in the short direction of the spot-like projection portions 51 in the projected portion groups 52B and 52D is about the half of the spaced-apart distance in the short direction of the spot-like projection portions 51. In this case, the spot-like projection portions 51 provided on the second surface are positioned at a center of a parallelogram formed with four spot-like projection portions 51 provided on the first surface as vertices. The spot-like projection portions 51 provided on the first surface are positioned at a center of a parallelogram formed with four spot-like projection portions 51 provided on the second surface as vertices. In this manner, the spot-like projection portions 51 provided on the second surface efficiently press the space 35 between the first surface S1 and the separator 13, and the spot-like projection portions 51 provided on the first surface efficiently press the space 35 between the second surface S2 and the separator 13. In this manner, the surface pressure during charging can be kept high, and reduction in cycle characteristics can be significantly suppressed.

The disposition of the spacer 50 (projected portion groups 52C, 52D) provided on the second surface S2 is not limited to the example of FIG. 5. For example, the spacer 50 (projected portion groups 52C, 52D) provided on the second surface S2 may be disposed at positions overlapping the spacer 50 (projected portion groups 52A, 52B) provided on the first surface S1. The spacer 50 (projected portion groups 52C, 52D) provided on the second surface S2 may be disposed at positions off from the center of the parallelogram formed with four spot-like projection portions 51 provided on the first surface.

In the illustrated example, a cylindrical lithium secondary battery including a woundtype electrode group has been described, but the present embodiment is not limited to this case and can be applied to other cases. The shape of the lithium secondary battery can be appropriately selected from various shapes depending on the application, and can be, in addition to the cylindrical shape, a coin-shaped, prism-shaped, sheet-type, and flat-type. The form of the electrode group is not particularly limited as well, and may be a laminate type. For the configuration other than the electrode group and the nonaqueous electrolyte of a lithium secondary battery, known ones can be used without particular limitation.

### [Examples]

In the following, a lithium secondary battery of the present disclosure is further described more in detail based on Examples and Comparative Examples. Note here that the present disclosure is not limited to the following Examples.

### <Example 1>

### (1) Positive electrode production

A rock salt type lithium-containing transition metal oxide containing Li, Ni, Co, and Al (molar ratio of Li relative to a total of Ni, Co, and Al is 1.0) and having a layered structure (NCA; positive electrode active material), acetylene black (AB; conductive material), and polyvinylidene fluoride (PVdF; binder) were mixed at a mass ratio of NCA: AB: PVdF = 95: 2.5: 2.5, and a suitable amount of N-methyl-2-pyrrolidone (NMP) was further added: the mixture was stirred, thereby preparing a positive electrode mixture slurry. Next, the produced positive electrode mixture slurry was applied to both surfaces of an Al foil (positive electrode current collector), and then dried, and the coating of the positive electrode mixture was rolled using a roller. Lastly, the produced laminate of the positive electrode current collector and the positive electrode mixture was cut into a predetermined electrode size, thereby producing a positive electrode including a positive electrode mixture layer on both sides of the positive electrode current collector.

### (2) Negative electrode unit production

A rectangular electrolytic copper foil (thickness 12 µm) was prepared as the negative electrode (negative electrode current collector). A polyimide ink was discharged on one surface of the electrolytic copper foil using a dispenser, and thereafter vacuum dried, thereby forming polyimide resin-made spacers in a spotted manner as shown in FIG. 4.

Thereafter, the same spacers were formed on the other surface of the electrolytic copper foil in the same manner as described above. At that time, the position of the holes with a diameter of 0.8 mm formed at four corners of the electrolytic copper foil were checked with a CCD camera to adjust the positions of the spacer to be provided, so that when seen from one surface, the spacers formed on the other surface overlap the positions of the spacers formed on one surface. Then, the above-described electrolytic copper foil was cut into a predetermined electrode size. In this manner, a negative electrode unit including a strip negative electrode, and a spacer including a plurality of spot-like projection portions disposed on both surfaces of the negative electrode was produced. The width of the electrolytic copper foil cut into the electrode size was 65 mm, and the longitudinal direction length was 1000 mm.

The contour shape of the plurality of spot-like projection portions was a circle with a diameter of 1 mm. In the projected portion groups, the arrangement interval in the short direction of the spot-like projection portions (center-to-center distance of the spot-like projection portions) was 3.536 mm. In the plurality of projected portion groups, the arrangement interval in the longitudinal direction (distance between straight lines connecting the spot-like projection portions and parallel to the short direction) was 1.768 mm. The ratio (coverage of the negative electrode surface with the spacer) of the area of the negative electrode surface (one surface) covered with the spacer relative to the negative electrode surface (one surface) area was 12.6%.

### (3) Nonaqueous electrolyte preparation

EC and DMC were mixed with a volume ratio of EC: DMC = 30: 70. To the produced solvent mixture, 1 mol /L of LiPF₆ and 0.1 mol /L of LiBF₂(C₂O₄) were dissolved, thereby preparing a liquid nonaqueous electrolyte.

### (4) Battery production

An A1-made tab was attached to the positive electrode obtained above. ANi-made tab was attached to the negative electrode current collector of the negative electrode unit obtained above. In an inert gas atmosphere, the positive electrode and the negative electrode were wound into a spiral shape with the separator interposed therebetween, thereby producing a wound type electrode group. Lithium contained in the electrode group was all derived from the positive electrode, and therefore a molar ratio mLi/mM of a total amount mLi of lithium contained in the positive electrode and the negative electrode to the amount mM of the metal M contained in the positive electrode (here, Ni, Co, and Al) was 1.0. A microporous film made of polyethylene was used as the separator. The produced electrode group was accommodated in an envelope type outer case formed with a laminate sheet including an Al layer, and to the outer case accommodating the electrode group, the above-described nonaqueous electrolyte was injected, and then the outer case was sealed, thereby producing a lithium secondary battery Al.

### <Example 2>

In the production of the negative electrode unit, in the plurality of projected portion groups, the arrangement interval in the longitudinal direction (distance between straight lines connecting the spot-like projection portions and parallel to the short direction) was set to 3.536 mm. Except for this, a lithium secondary battery A2 was produced in the same manner as in Example 1. The ratio (coverage of the negative electrode surface with the spacer) of the area of the negative electrode surface (one surface) covered with the spacer relative to the negative electrode surface (one surface) area was 6.3%.

### <Example 3>

In the production of the negative electrode unit, the plurality of projected portion groups were disposed in the longitudinal direction so that in the projected portion groups, the positions of the spot-like projection portions 51 in the short direction coincide between the projected portion groups. In the projected portion groups, the arrangement interval in the short direction of the spot-like projection portions (center-to-center distance of the spot-like projection portions) was 1.768 mm. In the plurality of projected portion groups, the arrangement interval in the longitudinal direction (distance between straight lines connecting the spot-like projection portions and parallel to the short direction) was 3.536 mm. The ratio (coverage of the negative electrode surface with the spacer) of the area of the negative electrode surface (one surface) covered with the spacer relative to the negative electrode surface (one surface) area was 12.6%. Except for this, a lithium secondary battery A3 was produced in the same manner as in Example 1.

### <Comparative Example 1>

In the production of the negative electrode unit, a spacer was formed to extend like a line along the longitudinal direction of the negative electrode. The spacer (line-like projection portion) extending in the longitudinal direction had a width in the short direction of 1 mm. The arrangement interval in the short direction of the line-like projection portion (distance between the center lines of the line-like projection portions) was 5 mm. The ratio (coverage of the negative electrode surface with the spacer) of the area of the negative electrode surface (one surface) covered with the spacer was 20%. Except for this, a lithium secondary battery B1 was produced in the same manner as in Example 1.

### [Evaluation 1]

The above-described batteries were subjected to a charge and discharge test. In the charge and discharge test, the battery was charged under the following conditions in a constant temperature bath at 25°C, then rested for 20 minutes, and discharged under the following conditions.

### (Charge)

Constant current charging was performed at a current of 2.15 mA per electrode unit area (square centimeter) until the battery voltage reached 4.1 V, and thereafter, constant voltage charging was performed at a voltage of 4.1 V until the electric current value reached 0.54 mA per electrode unit area.

### (Discharge)

Constant current discharging was performed at a current of 2.15 mA per electrode unit area (square centimeter) until the battery voltage reached 3.75 V

Regarding the above-described charge and discharge as one cycle, the cycle of charge and discharge was performed to 100 cycles. The ratio (%) of the discharge capacity at the 100th cycle relative to the discharge capacity at the 1st cycle was determined as a capacity retention rate.

The evaluation results are shown in Table 1.

**[Table 1]**

| | Spacer | | | Coverage with spacer of negative electrode surface (%) | Capacity retention rate (%) |
|---|---|---|---|---|---|
| | Shape | Positional relation between projected portion groups next to each other in the longitudinal direction | Projected portion groups (or line-like projection portion) interval (mm) | | |
| A1 | Spot-like | Staggered | 1.768 | 12.6 | 96.8 |
| A2 | Spot-like | Staggered | 3.536 | 6.3 | 96.7 |
| A3 | Spot-like | Same | 3.536 | 12.6 | 96.0 |
| B1 | Line-like | - | 5.00 | 20.0 | 95.1 |

The batteries A1 to A3 had a high capacity retention rate compared with the battery B1. In particular, the batteries A1 and A2, in which between the projected portion groups that are next to each other in the longitudinal direction, the positions of the spot-like projection portions in the projected portion group in the short direction are disposed to be staggered and offset, showed significantly improved capacity retention rates.

### [Industrial Applicability]

The lithium secondary battery of the present disclosure can be used for electronic devices such as mobile phones, smartphones, and tablet devices; electric vehicles including hybrid vehicles, and plug-in hybrid vehicles; and household storage batteries in combination with solar batteries.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10 lithium secondary battery
11 positive electrode
12 negative electrode unit
13 separator
14 electrode group
15 case main body
16 sealing body
17, 18 insulating plate
19 positive electrode lead
20 negative electrode lead
21 step portion
22 filter
23 lower valve
24 insulating member
25 upper valve
26 cap
27 gasket
30 positive electrode current collector
31 positive electrode mixture layer
40 negative electrode
50 spacer
51 spot-like projection portion
52A to 52D projected portion group

## Claims

1. A lithium secondary battery comprising:
a positive electrode,
a negative electrode facing the positive electrode,
a separator disposed between the positive electrode and the negative electrode,
a nonaqueous electrolyte having lithium ion conductivity, and
a spacer disposed between the negative electrode and the separator, wherein
lithium metal deposits on the negative electrode during charging, and the lithium metal dissolves from the negative electrode during discharging, and
the spacer has a plurality of spot-like projection portions.

2. The lithium secondary battery of claim 1, wherein the spacer includes a plurality of projected portion groups, in which the plurality of spot-like projection portions are disposed at an equal interval in a short direction of the negative electrode having a strip shape, and
the plurality of the projected portion groups are arranged at an equal interval in a longitudinal direction of the negative electrode, and the spot-like projection portions are disposed so that their positions in the short direction are offset between the projected portion groups next to each other.

3. The lithium secondary battery of claim 2, wherein between the projected portion groups next to each other, the spot-like projection portions are disposed so that their positions in the short direction are offset by half of the interval of arrangement of the plurality of spot-like projection portions in the projected portion groups.

4. The lithium secondary battery of any one of claims 1 to 3, wherein the spacer has a height h of 0.015 mm or more and 0.1 mm or less.

5. The lithium secondary battery of any one of claims 1 to 4, wherein among the plurality of spot-like projection portions, a portion thereof has a height different from the height of the rest of the plurality of spot-like projection portions.

6. The lithium secondary battery of any one of claims 1 to 5, wherein the plurality of projected portions are formed of a resin material.

7. The lithium secondary battery of any one of claims 1 to 6, wherein when a straight line is drawn on the plurality of spot-like projection portions, the straight line passing one of the spot-like projection portions and being parallel in the short direction of the negative electrode, the distance between the straight lines next to each other is 1.5 mm or more and 4.0 mm or less.

8. The lithium secondary battery of any one of claims 1 to 7, wherein a ratio of an area of the negative electrode surface covered with the spacer relative to a negative electrode surface area is 5% or more and 20% or less.
